# EUROPÄISCHE PATENTSCHRIFT

(11) **EP 1 970 241 B1**
(45) Veröffentlichungstag und Bekanntmachung des Hinweises auf die Patenterteilung: **29.01.2014**
(21) Anmeldenummer: 08003960.5
(22) Anmeldetag: 04.03.2008
(51) Int. Cl.: B60K 15/00

(54) **Kraftstoffbehälter**
Fuel container
Récipient de combustible

(30) Priorität: 14.03.2007 DE 102007012948
(43) Veröffentlichungstag der Anmeldung: 17.09.2008
(73) Patentinhaber: MAGNA STEYR Fuel Systems GmbH Werk Schwäbisch Gmünd, 73529 Schwäbisch Gmünd (DE)
(72) Erfinder: Klein, Steffen, 73525 Schwäbisch Gmünd (DE); Fischer, Dirk, 89180 Berghülen (DE); Kögel, Alexander, 89077 Ulm (DE)
(74) Vertreter: Rausch, Gabriele

(56) Entgegenhaltungen:
- EP-A1- 0 041 876
- EP-A1- 0 976 677
- EP-A1- 1 503 055
- EP-A2- 1 736 350
- WO-A1-2007/069987
- DE-A1- 3 501 094
- DE-A1- 10 019 221
- US-A- 4 852 761
- US-B1- 6 182 693
- US-B1- 6 223 526

## Beschreibung

Die Erfindung betrifft einen Kraftstoffbehälter für Fahrzeuge, insbesondere für Nutzfahrzeuge, mit einer Außenhülle, welche wenigstens einen Innenraum zur Aufnahme eines flüssigen oder gasförmigen Mediums ausgebildet, gemäß dem Oberbegriff von Anspruch 1.

Ein gattungsgemäßer Kraftstoffbehälter ist aus der EP 1 736 350 A2 bekannt.

Aus der EP 1 736 350 A2 ist ein Kraftfahrzeug mit einer Brennkraftmaschine bekannt, die aus einem Kraftstoffraum mit Kraftstoff versorgbar ist. Vorgesehen ist eine mit einem Reduktionsmittel betreibbare Abgasreinigungsanlage, wobei für die Bevorratung des Reduktionsmittels ein Reduktionsmittelraum vorgesehen ist, der zusammen mit dem Kraftstoffraum zu einer Baueinheit zusammengefasst ist. Vorgesehen ist dabei, dass als Kraftstoffraum ein geschlossener erster Tankabschnitt dient, an dessen zumindest einem stirnseitigen Ende sich ein einseitig offener zweiter Tankabschnitt anschließt, welcher als Behausung für die Aufnahme eines separaten Innentanks vorgegehen ist. Der separate Innentank bildet dabei den Reduktionsmittelraum. Der Innentank kann an seinem Umfang Ausnehmungen aufweisen, die mit Aufhängungen eines den Tankabschnitt abschließenden Abschlussdeckels korrespondieren und dazu dienen, den Innentank im zweiten Tankabschnitt zu fixieren und zu halten.

Ein weiterer Kraftstoffbehälter ist aus der DE 202 08 040 A1 bekannt. Bei dem Kraftstoffbehälter setzt sich die Außenhülle aus einer Umfangswandung zusammen, welche stirnseitig durch jeweils eine Stirnwandung abgeschlossen ist. In der Regel ist die Umfangswandung rohrförmig ausgebildet, wobei an deren beiden offenen Enden die Stirnwandungen (Stirnseiten) aufgeschweißt sind. Es sind jedoch auch Kraftstoffbehälter bekannt, die sich aus einem oder mehreren hülsenförmigen Teilen zusammensetzen, bei denen wenigstens ein Teil der Umfangswandung einstückig mit der Stirnwandung ist.

Je nach Ausgestaltung des Kraftstoffbehälters kann dieser einen oder mehrere voneinander getrennte Innenräume aufweisen. Bekannt ist dabei auch, dass in der Umfangswandung eine oder mehrere Zwischenwände, beispielsweise in Form von Schwallwänden oder in Form von Trennwänden zur Unterteilung des Kraftstoffbehälters angeordnet sind. Bekannt sind auch Zwischenwände in Form von Stützelementen, welche die Stabilität der Außenhülle erhöhen sollen.

Kraftstoffbehälter für Nutzfahrzeug sind in der Regel aus Edelstahl, Stahl, Aluminium oder entsprechenden Legierungen hergestellt. Möglich ist es auch, die Umfangswandung und die Zwischenwände aus unterschiedlichen Materialien herzustellen, beispielsweise die zwischenwände aus Kunststoff und die Umfangswandung aus Metall. Bekannt sind auch Kraftstoffbehälter, deren Außenhüllen vollständig aus Kunststoff gebildet sind.

Aus der Praxis ist es bekannt, den Kraftstoffbehälter zusätzlich zu einem Einfüllstutzen mit verschiedenen Funktionselementen, beispielsweise Filtern, Heizelementen, Kühlelementen, Wasserabscheidern oder dergleichen, zu versehen, welche in der Regel an der Umfangswandung befestigt werden.

Im Nutzfahrzeugbereich entstand in den letzten Jahren - bedingt durch wachsende Anforderungen an die Umweltverträglichkeit derartiger Fahrzeuge - ein Bedarf an Kraftstoffbehältern, deren Funktion über die eines konventionellen Kraftstofftanks hinausgeht. So wurde es beispielsweise in jüngerer Zeit erforderlich, im Rahmen der Maßnahmen zur Schadstoffreduzierung, zum Beispiel bei der Entstickung von Dieselabgasen, Harnstoff im Abgassystem von Nutzfahrzeugen einzusetzen. Damit entstand ein Bedarf an Tanks, die zum Mitführen des benötigten, chemisch aggressiven Harnstoffs geeignet sind.

Aus dem allgemeinen Stand der Technik ist es dabei bekannt, Anbauteile an bestehende Kraftstoffbehälter durch Kleben, Schrauben, Nieten oder Schweißen anzubringen. Bekannt ist es zudem, den Kraftstoffbehälter durch eine Trennwand zu unterteilen, so dass zwei voneinander getrennte Innenräume entstehen.

Eine besonders vorteilhafte Lösung zur Mitführung eines chemisch aggressiven gasförmigen oder flüssigen Mediums ist in der DE 20 2006 002 035.7 beschrieben. Dabei ist vorgesehen, dass die Innenseite der Tragstruktur eines Behälters mit einer Kunststoff-Sinterschicht bedeckt ist. Hierzu ist die Tragstruktur aus einem vergleichsweise steifen Material, wie beispielsweise einem Metall, gefertigt, auf deren Innenwandung die dünne Kunststoff-Sinterschicht aufgebracht ist. Dabei kann vorgesehen sein, dass der mit der Kunststoff-Sinterschicht versehene Behälter durch eine umlaufende Schweißnaht mit einem zweiten Behälter, bei dem es sich um einen regulären Kraftstoffbehälter handeln kann, verbunden wird.

Die Lösung hat sich für viele Anwendungsgebiete als geeignet herausgestellt in kostengünstiger Art und Weise einen aus zwei Teilbehältern gebildeten gemeinsamen großen Behälter zu schaffen und diesen in üblicher Weise an einer Halterungseinrichtung, beispielsweise einer Konsole eines Nutzfahrzeuges, anzubringen.

Der vorliegenden Erfindung liegt die Aufgabe zugrunde, einen Kraftstoffbehälter zu schaffen, der es ermöglicht, wenigstens zwei Medien getrennt voneinander zu transportieren, wobei der Kraftstoffbehälter einen einfachen Aufbau aufweisen und kostengünstig in der Herstellung sein soll.

Diese Aufgabe wird erfindungsgemäß durch Anspruch 1 gelöst.

Durch die erfindungsgemäße Anordnung eines Zusatztanks im Innenraum eines Kraftstoffbehälters wird in einfacher und kostengünstiger Weise im Innenraum des Kraftstoffbehälters ein zweiter Füllraum zur Verfügung gestellt. Dabei wird der Zusatztank durch die Außenhülle des Kraftstoffbehälters vor äußeren Einflüssen bzw. mechanischen Einwirkungen geschützt, so dass die Hülle des Zusatztanks einfach gestaltet sein kann. Durch die Anordnung des Zusatztanks im Innenraum des Kraftstoffbehälters wird im wesentlichen nur so viel Bauraum für den Zusatztank verwendet, wie dessen Füllvolumen entspricht. Lösungen gemäß dem Stand der Technik haben den Nachteil, dass der Zusatztank durch teilweise aufwändige und bauraumintensive Maßnahmen an einen bestehenden Kraftstoffbehälter angeschweißt werden musste, so dass entsprechend Bauraum verloren geht, der somit nicht zur Befüllung mit einem gasförmigen oder flüssigen Medium verfügbar ist.

Die bekannten Lösungen gemäß dem Stand der Technik, bei denen der Innenraum des Kraftstoffbehälters durch eine Trennwand in zwei Innenräume unterteilt wird, nutzen zwar ebenfalls den Bauraum effektiv aus, sind jedoch ungeeignet, wenn das zweite zur Befüllung vorgesehene Medium beispielsweise aufgrund dessen chemischer Aggressivität eine andere Hülle benötigt als das erste Medium.

Durch die erfindungsgemäße Lösung ist es nunmehr möglich, in platzsparender Weise in den Innenraum des Kraftstoffbehälters einen Zusatztank anzubringen. Das im Innenraum des Kraftstoffbehälters enthaltene Medium trägt dabei zur Stabilisierung des Zusatztanks bei bzw. ist geeignet, durch Fahrbewegungen entstehende Kräfte mit aufzunehmen. Der Zusatztank ist somit "schwimmend" in dem Innenraum gelagert. Erfindungsgemäß ist, um eine unkontrollierte Bewegung des Zusatztanks in dem Innenraum des Kraftstoffbehälters zu vermeiden, vorgesehen, dass der Zusatztank zwischen einer ersten Zwischenwand und einer zweiten Zwischenwand bzw. einer Stirnseite der Außenhülle angeordnet ist. Die Anordnung soll dabei derart erfolgen, dass die Bewegung des Zusatztanks in Längsrichtung des Kraftstoffbehälters stabilisiert wird.

Vorzugsweise kann dies dadurch erfolgen, dass der Zusatztank zwischen die beiden Zwischenwände oder eine Zwischenwand und eine Stirnseite der Außenhülle eingepasst wird. Vorzugsweise kann dies formschlüssig erfolgen. Es ist jedoch, insbesondere in Abhängigkeit der Beschaffenheit des Zusatztanks, nicht zwingend notwendig, den Zusatztank so einzupassen, dass dieser überhaupt keine Bewegung durchführen kann.

Eine Anordnung des Zusatztanks derart, dass dieser keine Bewegungen ausführen kann, eignet sich besonders, wenn der Zusatztank als Behälter, beispielsweise als Kunststoffbehälter, ausgebildet ist. Demgegenüber ist es in einer Ausgestaltung des Zusatztanks mit wenigstens teilweise flexiblen Wänden, beispielsweise als Beutel, Sack, Tüte oder dergleichen, durchaus möglich, diesen einen gewissen Bewegungsspielraum einzuräumen.

In einer Ausgestaltung des Zusatztanks als Behälter hat es sich als besonders geeignet herausgestellt, wenn wenigstens eine Stirnseite des Behälters eine an die angrenzende Zwischenwand oder Stirnseite der Außenhülle angepasste Struktur aufweist. Dies kann beispielsweise durch eine konvexe und/oder konkave Form erfolgen. Möglich sind hierbei jedoch beliebige zueinander korrespondierende Ausgestaltungen. Besonders vorteilhaft ist es dabei, wenn beide Stirnseiten des Zusatztanks an die jeweils angrenzende Zwischenwand oder Stirnseite der Außenhülle angepasst sind. Daraus ergibt sich ohne weiteres eine feste und sichere Verbindung des Zusatztanks in dem Kraftstoffbehälter.

Eine konstruktiv besonders vorteilhafte Lösung ergibt sich auch dadurch, dass wenigstens eine an den Zusatztank angrenzende Zwischenwand als Schwallwand ausgebildet ist, wobei wenigstens eine Durchgangsöffnung der Schwallwand ein Verbindungselement darstellt, welches mit einem als Vorsprung ausgebildeten Verbindungselement des Zusatztanks korrespondiert. Der Zusatztank lässt sich somit mittels dem oder der Vorsprünge in einfacher Weise in die in einer Schwallwand vorhandenen Durchgangsbohrungen einstecken bzw. einbringen. In einfacher Weise lässt sich somit eine formschlüssige Verbindung des Zusatztanks mit der Schwallwand realisieren.

Von Vorteil ist es, wenn der Zusatztank zwischen zwei Schwallwänden angeordnet ist und Vorsprünge des Zusatztanks formschlüssig mit Durchgangsbohrungen der Schwallwände verbunden sind. Dabei kann vorgesehen sein, dass sich der Zusatztank nur über einen Teil der Fläche der Schwallwände erstreckt, so dass einige Durchgangsbohrungen der Schwallwände frei bleiben und das im Innenraum des Kraftstoffbehälters angeordnete flüssige oder gasförmige Medium um den Zusatztank herum strömen und sich vorteilhaft ausgleichen kann. Um ein vorteilhaftes Durchströmen der Schwallwände zu ermöglichen, können die unverdeckten Durchgangsbohrungen auch größer als üblich ausgebildet sein bzw. gegebenenfalls die gesamte unverdeckte Fläche der Schwallwand eine Durchgangsbohrung darstellen.

Insofern es vorteilhaft erscheint, den Innenraum des Kraftstoffbehälters weiter zu unterteilen, so dass ein drittes Medium aufgenommen werden kann, kann auch vorgesehen sein, dass eine Schwallwand als Trennwand ausgebildet ist. Insofern in diesem Fall eine formschlüssige Verbindung zwischen dem Zusatztank und der Trennwand gewünscht ist, kann dies über entsprechend miteinander korrespondierende Verprägungen, Vorsprünge, Sicken oder dergleichen erfolgen.

Grundsätzlich kann der Innenraum des Kraftstoffbehälters auch unabhängig von dem Zusatztank mit weiteren Schwall- oder Trennwänden zur beliebigen Gestaltung des Innenraums versehen sein.

Die Anordnung des Zusatztanks ist erfindungsgemäß nicht darauf beschränkt, dass die Zwischenwand als Schwallwand oder Trennwand ausgebildet ist, vielmehr sind hierbei beliebige Ausgestaltungen möglich, beispielsweise kann es sich bei der Zwischenwand auch um ein Stabilisierungselement handeln, welches geeignet ist, die Außenhülle zu verstärken.

Die Anordnung des Zusatztanks im Innenraum des Kraftstoffbehälters kann in beliebiger Art und Weise erfolgen, wobei sich eine in Längsrichtung betrachtet mittige Anordnung als besonders geeignet herausgestellt hat.

Da insbesondere großvolumige Kraftstoffbehälter zumeist ohnehin mit einem oder mehreren Schwallwänden versehen sind, lässt sich in diesem Fall die Anordnung des Zusatztanks im Innenraum in einfacher Weise realisieren. In der Regel weisen die Schwallwände dabei eine konvexe bzw. konkave Form auf, die unabhängig oder gemeinsam mit den Durchgangsbohrungen geeignet ist, den Zusatztank formschlüssig aufzunehmen. In einer bevorzugten Ausgestaltung des Zusatztanks als Kunststoffbehälter kann dieser in einfacher Weise an den Verlauf der Schwallwände bzw. deren Durchgangsbohrungen angepasst werden. Maßnahmen an den Schwallwänden sind somit nicht notwendig.

Zur Abdichtung der Öffnung in der Hülle des Zusatztanks mit der Anschlussöffnung in der Außenhülle des Kraftstoffbehälters sind verschiedene Maßnahmen denkbar. Vorzugsweise ist zwischen dem Zusatztank und der Außenhülle ein Dichtring eingelegt, der die Öffnung in der Hülle bzw. die Anschlussöffnung in der Außenhülle umgibt. Durch eine Befestigung des Zusatztanks an der Außenhülle kann der Dichtring fest zwischen den beiden Öffnungen eingepresst werden. Dadurch wird zuverlässig vermieden, dass aus dem Innenraum des Kraftstoffbehälters durch die Anschlussöffnung in der Außenhülle Medium ausdringt.

Durch die Anbindung des Zusatztanks sowohl an den Zweischenwänden als auch über die Öffnung an der Außenhülle entsteht eine zuverlässige Verbindung/Fixierung.

In einer Ausgestaltung des Zusatztanks als reißfester und gegenüber dem einzubringenden Medium beständiger Sack, Tüte oder Beutel hat es sich als besonders geeignet herausgestellt, wenn dieser im Bereich der Anschlussöffnung mit der Außenhülle des Kraftstoffbehälters verbunden ist. Die Verbindung kann dabei dadurch erfolgen, dass der Sack, die Tüte oder der Beutel im Bereich der Anschlussöffnung aufgesteckt und/oder eingeschraubt und/oder aufgehängt ist. Vorteilhaft ist es dabei, wenn die wenigstens eine Öffnung des Sacks, der Tüte oder des Beutels mit einem Fixierring oder einem Flansch versehen ist, welcher geeignet ist, mit der Anschlussöffnung in der Außenhülle des Kraftstoffbehälters verbunden zu werden.

Vorteilhafte Ausgestaltungen und Weiterbildungen der Erfindung ergeben sich aus den weiteren abhängigen Ansprüchen. Nachfolgend ist anhand der Zeichnung ein Ausführungsbeispiel der Erfindung prinzipmäßig dargestellt.

Es zeigt:
- Fig. 1: eine Prinzipdarstellung eines erfindungsgemäßen Kraftstoffbehälters in perspektivischer Ansicht;
- Fig. 2: einen Längsschnitt durch einen Teil der Außenhülle eines Kraftstoffbehälters mit einer Darstellung von zwei Schwallwänden, zwischen denen ein Zusatztank angeordnet ist;
- Fig. 3: eine Darstellung gemäß Fig. 2, in der auch der Zusatztank und die beiden Schwallwände geschnitten sind;
- Fig. 4: eine perspektivische Darstellung eines Zusatztanks;
- Fig. 5: eine weitere perspektivische Darstellung des Zusatztanks;
- Fig. 6: eine vergrößerte Darstellung einer Öffnung in dem Zusatztank sowie einer Anschlussöffnung in der Außenhülle mit einer prinzipmäßig dargestellten Dichtung in einer ersten Ausgestaltung;
- Fig. 7: eine vergrößerte Darstellung einer Öffnung in dem Zusatztank sowie einer Anschlussöffnung in der Außenhülle mit einer prinzipmäßig dargestellten Dichtung in einer zweiten Ausgestaltung;
- Fig. 8: eine prinzipmäßige Darstellung einer Anordnung eines Zusatztanks, der zwischen zwei Zwischenwänden dadurch gehalten ist, dass die Struktur der Stirnseiten des Zusatztanks an die Struktur bzw. den Verlauf der Zwischenwände angepasst ist;
- Fig. 9: eine prinzipmäßige Darstellung eines Zusatztanks in einer Ausgestaltung als Tüte, Beutel oder Sack; und
- Fig. 10: eine prinzipmäßige Darstellung eines Zusatztanks in einer zweiten Ausgestaltung als Tüte, Beutel oder Sack.

Das dargestellte und nachfolgend beschriebene Ausführungsbeispiel zeigt einen Kraftstoffbehälter, der für Kraftfahrzeuge, insbesondere für Nutzfahrzeuge (vorzugsweise Lastkraftwagen), ausgebildet ist. Da Kraftstoffbehälter dieser Art allgemein bekannt sind, wird nachfolgend nur auf die für die Erfindung wesentlichen Teile des Kraftstoffbehälters näher eingegangen. Der Kraftstoffbehälter kann aus beliebigen hierfür bekannten Materialien - auch in Hybridbauweise - gebildet sein.

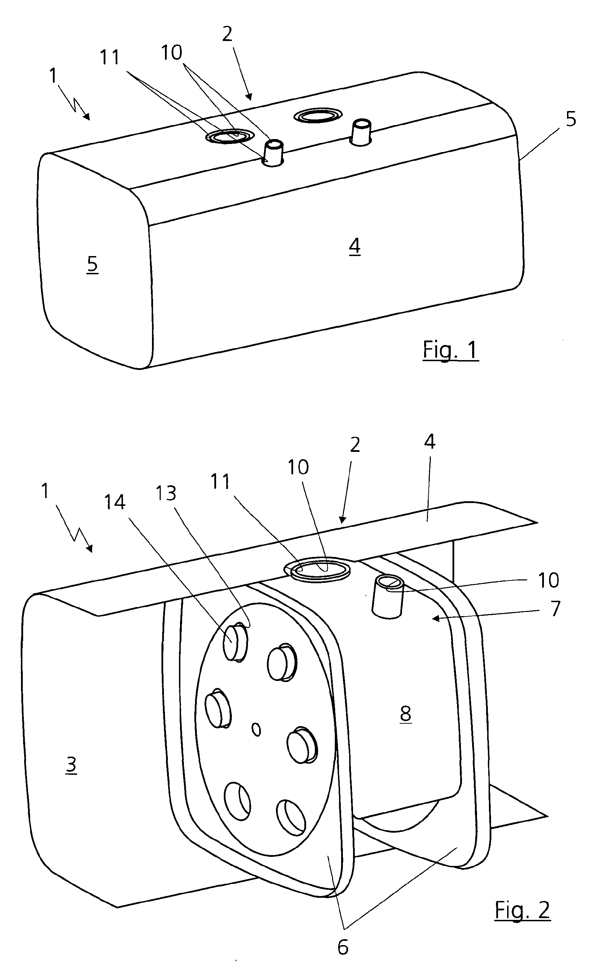

Die Figuren 1 bis 3 zeigen einen Kraftstoffbehälter 1 mit einer Außenhülle 2, welche wenigstens einen Innenraum 3 zur Aufnahme eines flüssigen oder gasförmigen Mediums ausbildet. Im Ausführungsbeispiel ist dabei die Aufnahme eines flüssigen Mediums, vorzugsweise eines Kraftstoffs, vorzugsweise Diesel, vorgesehen. Vorgesehen ist eine Ausbildung des Kraftstoffbehälters 1 als großwandigen Kraftstoffbehälter mit einer Aufnahmekapazität des Innenraums 3 von 300 - 1.600 Litern, vorzugsweise von 500 bis 1.000 Litern.

Die Außenhülle 2 ist im Ausführungsbeispiel durch eine Umfangswandung 4, welche aus einem Blech in eine Rohrforme gebogen wurde, und zwei Stirnwandungen, welche die beiden offenen Stirnseiten der rohrförmigen Umfangswandung 4 verschließen, gebildet. Die Stirnwandungen bilden somit die Stirnseiten 5 der Außenhülle 2.

Im Innenraum 3 zwischen den zwei Stirnseiten 5 der Außenhülle 2 sind im Ausführungsbeispiel zwei Zwischenwände 6 angeordnet. Die beiden Zwischenwände 6 verlaufen dabei im wesentlichen planparallel zu den Stirnseitein 5. Im Ausführungsbeispiel sind die Zwischenwände 6 als Schwallwände ausgebildet, so dass der Innenraum 3 des Kraftstoffbehälters 1 einen großen Behälter zur Aufnahme eines ersten flüssigen Mediums darstellt.

Grundsätzlich könnten die Zwischenwände 6 auch als Trennwände, Stabilisierungswände oder dergleichen ausgebildet sein.

Wie sich insbesondere aus den Figuren 2, 3, 9 und 10 ergibt, ist im Innenraum 3 des Kraftstoffbehälters 1 ein Zusatztank 7 angeordnet. Der Zusatztank 7 weist dabei eine von dem Kraftstoffbehälter 1 unabhängige Hülle 8 auf, welche einen Aufnahmeraum 9 zur Aufnahme eines zweiten flüssigen oder gasförmigen Mediums bereitstellt. Im Ausführungsbeispiel ist dabei vorgesehen, dass in den Aufnahmeraum 9 ein zweites flüssiges Medium eingebracht wird, bei dem es sich vorzugsweise um einen Harnstoff handelt. Möglich ist jedoch auch die Aufnahme eines beliebigen anderen Mediums, bei dem es sich beispielsweise um einen Zweitkraftstoff, eine Hydraulikflüssigkeit, eine Betriebsstoffkomponente bzw. Drittkomponente oder Wasser handelt. Eine Aufnahme von Wasser bietet sich dann an, wenn in dem Kraftstoffbehälter 1 ein (nicht dargestellter) Wasserabscheider integriert ist, durch welchen aus dem ersten flüssigen Medium, welches in den Innenraum 3 des Kraftstoffbehälters 1 eingebracht ist, Wasser abgesondert wird.

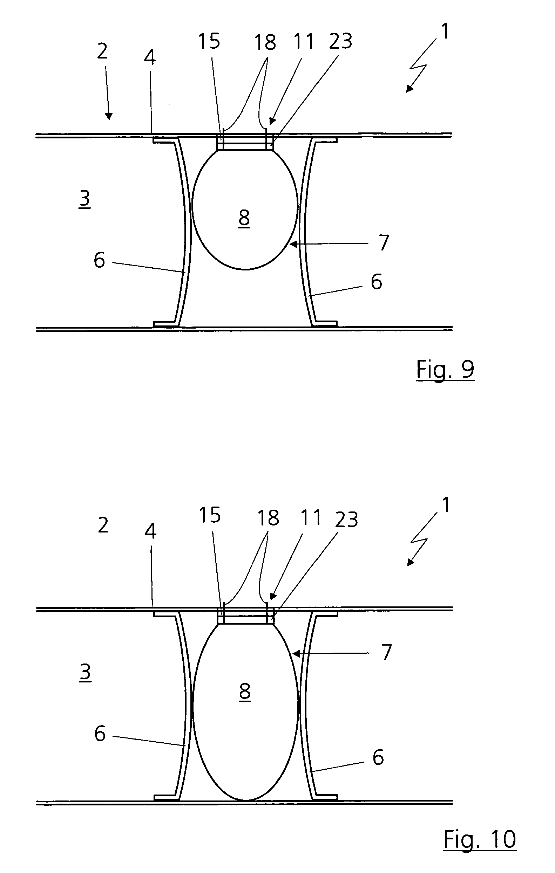

Wie aus den Figuren 2 und 3, 9 und 10 ersichtlich ist, weist die ansonsten geschlossene Hülle 8 des Zusatztanks 7 wenigstens eine Öffnung 10 auf, die mit einer Anschlussöffnung 11 in der Außenhülle 2 des Kraftstoffbehälters 1 verbunden ist. Im Ausführungsbeispiel ist dabei vorgesehen, dass der Zusatztank 7 zwei Öffnungen 10 aufweist, die mit entsprechenden Anschlussöffnungen 11 in der Außenhülle 2 des Kraftstoffbehälters 1 verbunden sind, wobei eine Öffnung 10 zur Befüllung des Aufnahmeraums 9 des Zusatztanks 7 und die andere Öffnung 10 zur Entnahme des in dem Aufnahmeraum 9 enthaltenen Mediums ausgebildet ist. Analog dazu ist auch der Zusatztank 7 gemäß der in den Figuren 9 und 10 dargestellten Ausführungsform mit Öffnungen 10 (nicht dargestellt) versehen.

Wie sich aus den Figuren 2, 3, 9 und 10 ergibt, ist der Zusatztank 7 derart zwischen einer ersten Schwallwand 6 und einer zweiten Schwallwand 6 angeordnet, dass die Bewegung bzw. die Bewegungsmöglichkeiten des Zusatztanks 7 in Längsrichtung des Kraftstoffbehälters 1 stabilisiert bzw. begrenzt wird. Anstelle der Anordnung zwischen zwei Schwallwänden 6 kann analog auch die Anordnung zwischen einer Schwallwand 6 und einer Stirnseite 5 der Außenhülle 2 vorgesehen sein (nicht dargestellt).

In den Figuren 1 bis 8 ist der Zusatztank 7 in einer Ausgestaltung als Behälter dargestellt. Vorgesehen ist dabei, dass der Zusatztank als Kunststoffbehälter 7 ausgebildet ist, dessen Hülle 8 im wesentlichen starre bzw. feste Wände aufweist. Der Kunststoffbehälter 7 ist dabei geeignet, dem chemisch aggressiven Harnstoff zu widerstehen.

Wie sich ferner aus den Figuren 1 bis 8 ergibt, weist der dort dargestellte Zusatztank 7 an seinen beiden Stirnseiten 12 eine an die angrenzenden Schwallwände 6 angepasste Struktur auf. Gemäß den Figuren 1 bis 5 sind die Schwallwände 6 von dem Zusatztank 7 ausgehend nach außen gewölbt, so dass auch die Stirnseiten 12 des Zusatztanks 7 eine derartige Wölbung nach außen aufweisen. Zusätzlich dazu weisen der Zusatztank 7 und die beiden Schwallwände 6 miteinander korrespondierende Verbindungselemente 13, 14 auf. Die Verbindungselemente 13 der Schwallwände 6 werden dabei durch deren Durchgangsöffnungen dargestellt, während die Verbindungselemente 14 des Zusatztanks 7 als Vorsprünge, Auskragungen oder dergleichen ausgebildet sind. Die Vorsprünge 14 des Zusatztanks 7 sind so an die Durchgangsöffnung 13 angepasst, dass sich eine wenigstens ansatzweise formschlüssige Verbindung ergibt. Üblicherweise sind die Durchgangsöffnungen 13 der Schwallwände 6 kreisrund ausgebildet, so dass auch die Vorsprünge 14 des Zusatztanks 7 eine derartige kreisrunde Form aufweisen.

Im Ausführungsbeispiel ist vorgesehen, dass sich der Zusatztank 7 nur über einen Teil der Höhe des Innenraums 3 des Kraftstoffbehälters 1 erstreckt. Das im Innenraum 3 aufgenommene flüssige Medium kann somit zumindest unterhalb des Zusatztanks 7 strömen, so dass sich das den Zusatztank 7 umgebende flüssige Medium (Diesel) austauschen kann. Gegebenenfalls kann der Zusatztank 7 alternativ oder ergänzend auch eine Breite aufweisen, die geringer ist als die Breite des Kraftstoffbehälters 1.

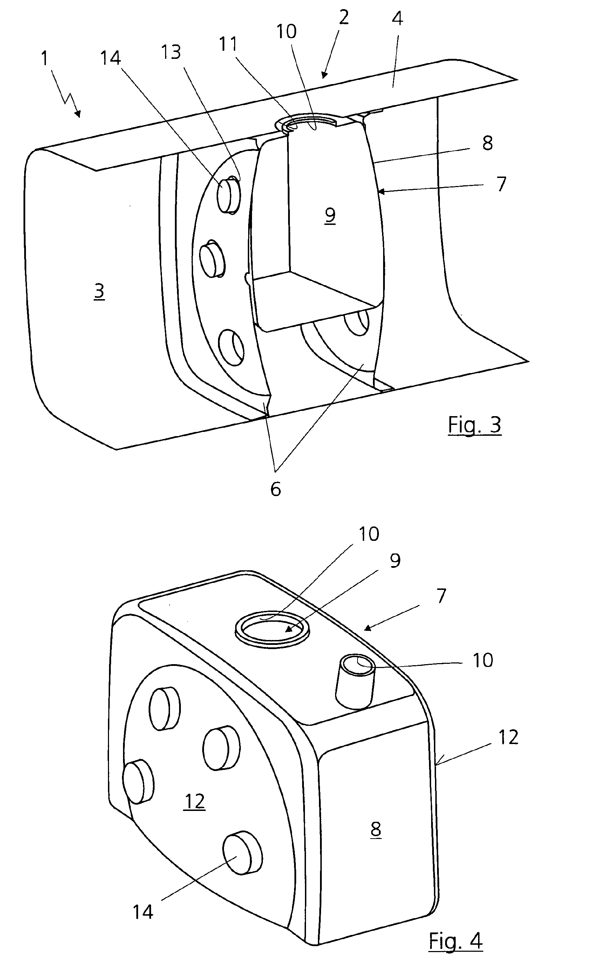

Wie sich insbesondere aus den Figuren 2 und 3 ergibt, entspricht die Anzahl und die Anordnung der Vorsprünge 14 des Zusatztanks 7 der Anzahl und Anordnung der Durchgangsbohrungen 13 der Fläche der Schwallwände 6, die an den Zusatztank 7 angrenzen.

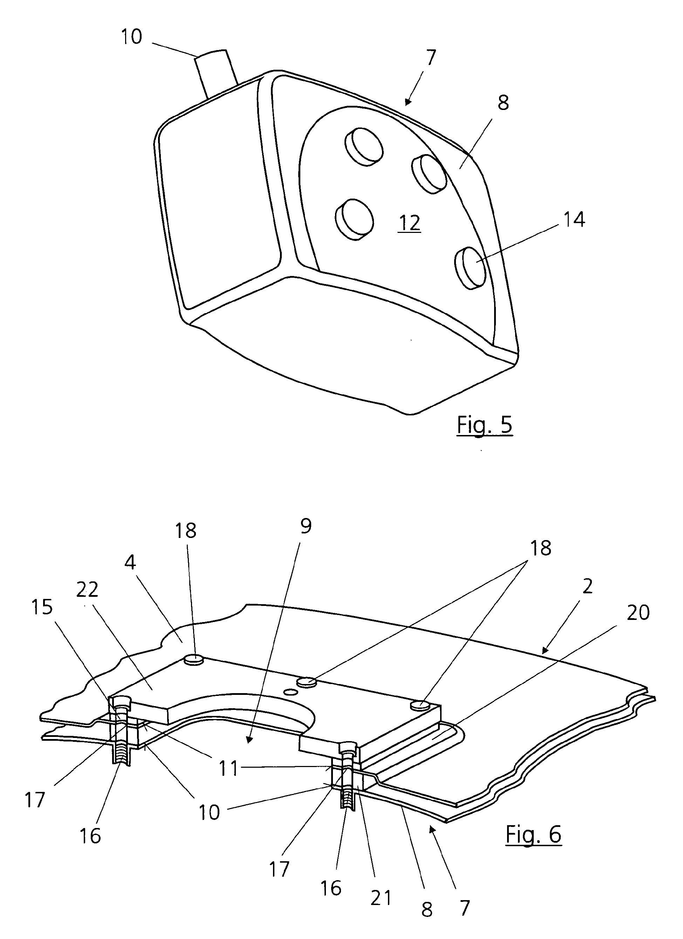

Fig. 6 zeigt eine mögliche Ausgestaltung des Zusatztanks 7 mit einer Dichtung 15. Dabei ist der Zusatztank 7 außenseitig an seiner Hülle 8 mit einem Flansch 21 verstärkt, welcher die Öffnung 10 umgibt. Der Flansch 21 ist somit zwischen dem Zusatztank 7 und der Innenseite der Außenhülle 2 in einem die Öffnung 10 des Zusatztanks 7 umfassenden Randbereich angeordnet. Um den Innenraum 3 zuverlässig abzudichten, bietet sich ein Zusammenspiel zwischen der Dichtung 15 und der Befestigung des Zusatztanks 7 an der Außenhülle 2 an. Dabei wird die Dichtung 15 auf die Außenhülle 2 derart aufgesetzt, dass die Dichtung 15 die AnschlussÖffnung 11 umgibt. Anschließend wird auf die Dichtung 15 ein notwendiges Anbauteil aufgesetzt, welches aus Vereinfachungsgründen lediglich als Bauteil 22 in Form einer Platte dargestellt ist. Bei dem Bauteil 22 kann es sich beispielsweise um einen Filterflansch, ein Hydraulikaggregat, ein Heizelement, ein Kühlelement, einen Wasserabscheider oder Kombinationen hieraus handeln. Das Bauteil 22 kann auch als Abschlussdeckel bzw. Revisionsdeckel ausgebildet sein, welcher über eine zusätzliche Öffnungsklappe verfügen kann. Das Bauteil 22 kann auch einen Tankdeckel zum Befüllen des Aufnahmeraums 9 des Zusatztanks 7 darstellen. Vorzugsweise ist dabei vorgesehen, dass der Zusatztank 7 mit der Außenhülle 2 und dem Bauteil 22 verschraubt ist. Hierzu kann der Zusatztank 7 Gewindebuchsen 16 und/oder Gewindebohrungen zur Verschraubung mit der Außenhülle 2 aufweisen. Fluchtend dazu kann die Außenhülle 2 und gegebenenfalls das Bauteil 22 mit Bohrungen 17 versehen sein. Zur Verschraubung können hierfür übliche Schrauben 18 eingesetzt werden, welche durch die Bohrungen 17 gesteckt und in den Gewindebuchsen 16 verschraubt werden. Dabei kann die Dichtung 15 so auf die Außenseite der Außenhülle 2 gepresst werden, dass ein Ausdringen von Diesel aus dem Innenraum 3 durch die Anschlussöffnung 11 zuverlässig vermieden wird.

Diese Art der Abdichtung bietet sich grundsätzlich auch für die in Fig. 9 und Fig. 10 dargestellte Ausführungsform des Zusatztanks 7 an.

Anstelle des Flansches 21 kann auch eine Dichtung 15 (bzw. ein Dichtring) eingesetzt werden. In diesem Fall kann die Dichtung 15 auf der Außenseite der Außenhülle 2 entfallen bzw. alternativ auch zusätzlich erhalten bleiben oder durch einen Flansch 21 zur Verstärkung ersetzt werden. Auch dadurch wird eine dichte Verbindung erzeugt.

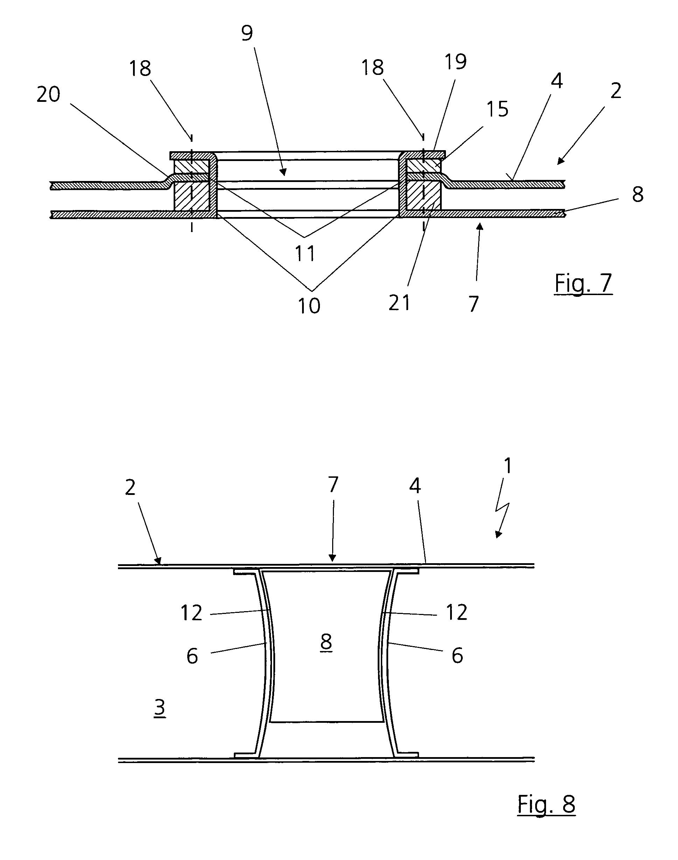

Fig. 7 zeigt eine weitere alternative Anordnung der Dichtung 15. Hierzu weist der Zusatztank 7 an der Öffnung 10 eine umlaufende Auskragung 19 auf, welche sich durch die Anschlussöffnung 11 in der Außenhülle 2 des Kraftstoffbehälters 1 erstreckt und an deren auf die Außenseite der Außenhülle 2 gerichteten Unterseite umlaufend die Dichtung 15 angeordnet ist. Die Dichtung 15 umgibt somit die Anschlussöffnung 11 in der Außenhülle 2 des Kraftstoffbehälters 1. Auch in dieser Ausgestaltung lässt sich durch eine in Fig. 7 nicht näher dargestellte Verschraubung 18 eine zuverlässige Verbindung sowohl zwischen der Außenhülle 2 und dem Zusatztank 7 als auch mit der Dichtung 15 herstellen. Bezüglich Details einer möglichen Verschraubung wird auf Fig. 6 verwiesen. Zur Verstärkung des Zusatztanks 7 ist in der in Fig. 7 dargestellten Ausführungsform ein Flansch 21 vorgesehen (analog zu Fig. 6). Die in Fig. 7 dargestellte Ausgestaltung der Abdichtung zwischen der Öffnung 10 und der Anschlussöffnung 11 kann auch auf die Ausführungsform des Zusatztanks 7 gemäß den Figuren 9 und 10 übertragen werden.

Wie sich insbesondere aus der Fig. 6 und der Fig. 7 ergibt, kann die Außenhülle 2 und/oder der Zusatztank 7 (hierfür nicht dargestellt) an den Flächen, die an die Dichtung 15 angrenzen, mit einer auf die Dichtung 15 ausgerichteten Verprägung 20 versehen sein.

Im Ausführungsbeispiel gemäß Fig. 6 und Fig. 7 ist die Verprägung 20 an dem Randbereich der Anschlussöffnung 11 in der Außenhülle 2 des Kraftstoffbehälters 1 ausgebildet und nach außen gezogen. Die Verprägung 20 bildet somit eine zusätzliche Dichtfläche. Insofern die Dichtung 15 zwischen der Außenhülle 2 und der Hülle 8 des Zusatztanks 7 angeordnet ist, kann die Verprägung 20 auch nach innen gezogen sein.

Fig. 8 zeigt eine weitere Möglichkeit der Befestigung eines Zusatztanks 7 in Form eines Behälters, bei der die Stirnseiten 12 des Zusatztanks 7 an den ausgeprägten Verlauf der angrenzenden Zwischenwände 6 derart angepasst sind, dass der Zusatztank 7 zwischen den Zwischenwänden 6 ausschließlich aufgrund der angepassten Struktur gehalten ist.

Die Figuren 9 und 10 zeigen eine Ausgestaltung des Zusatztanks 7 als hochreißfesten und gegenüber dem einzubringenden Medium beständigen Sack, Tüte oder Beutel. Vorzugsweise kann der Beutel 7 doppelwandig ausgebildet sein. Der Beutel 7 kann im Bereich der Anschlussöffnung 11 mit der Außenhülle 2 des Kraftstoffbehälters 1 verbunden sein. Vorzugsweise kann der Sack, die Tüte oder der Beutel 7 im Bereich der Anschlussöffnung 11 aufgesteckt und/oder eingeschraubt und/oder aufgehängt sein.

Der Sack, die Tüte oder der Beutel 7 kann eine oder mehrere Öffnungen 10 aufweisen (in Fig. 9 und 10 nicht dargestellt). Im Ausführungsbeispiel sind zwei Öffnungen 10 vorgesehen. Die Öffnungen 10 können dabei mit einem Fixierring oder einem Flansch 23 versehen sein, welcher geeignet ist, mit der Anschlussöffnung 11 in der Außenhülle 2 des Kraftstoffbehälters 1 verschraubt zu werden. Zwischen dem Flansch 23 und der Außenhülle 2 des Kraftstoffbehälters 1 kann eine Dichtung 15 eingebracht sein. Hierbei sind grundsätzlich die in den Figuren 6 und 7 dargestellten Ausführungsformen analog anwendbar.

Fig. 10 zeigt eine Ausgestaltung, bei der der Beutel 7 eine Länge derart aufweist, dass dieser wenigstens teilweise auf dem Boden des Kraftstoffbehälters 1 aufliegt. Dies trägt zur Stabilisierung der Bewegung des Beutels 7 bei.

Das Volumen des Beutels 7 kann im Ausführungsbeispiel 20 bis 150 Liter, vorzugsweise 50 bis 100 Liter, betragen.

Die Montage des Zusatztanks 7 kann beispielsweise dadurch erfolgen, dass in herkömmlicher Weise eine Außenhülle 2 des Kraftstoffbehälters 1 hergestellt und diese mit einer Schwallwand 6 versehen wird. Vor der Montage der zweiten Schwallwand 6 kann dann der Zusatztank 7 eingehängt (Figur 9 und 10) bzw. formschlüssig eingesteckt bzw. eingeclipst (Figuren 2 und 3) werden. Anschließend erfolgt in üblicher Weise die Montage der zweiten Schwallwand 6, durch die der Zusatztank 7 in seiner Bewegung stabilisiert bzw. begrenzt wird. In der in den Figuren 2 und 3 dargestellten Ausführungsform kann dabei vorgesehen sein, dass die Außenhülle 2 während der Montage derart geschwenkt wird, dass der Zusatztank 7 von oben eingesetzt werden kann und sich aufgrund der Schwerkraft im wesentlichen selber stabilisiert, ohne dass weitere Hilfsmaßnahmen notwendig sind.

## Patentansprüche

1. Kraftstoffbehälter für Fahrzeuge, insbesondere für Nutzfahrzeuge, mit einer Außenhülle, welche wenigstens einen Innenraum zur Aufnahme eines flüssigen oder gasförmigen Mediums ausbildet, wobei im Innenraum zwischen zwei Stirnseiten der Außenhülle wenigstens eine Zwischenwand angeordnet ist, wobei im Innenraum (3) ein Zusatztank (7) angeordnet ist, wobei der Zusatztank (7) eine von dem Kraftstoffbehälter (1) unabhängige Hülle (8) aufweist, welche einen Aufnahmeraum (9) zur Aufnahme eines zweiten flüssigen oder gasförmigen Mediums bereitstellt, wobei die Hülle (8) wenigstens eine Öffnung (10) aufweist, die mit einer Anschlussöffnung (11) in der Außenhülle (2) des Kraftstoffbehälters (1) korrespondiert und wobei der Zusatztank (7) derart zwischen einer ersten Zwischenwand (6) und einer zweiten Zwischenwand (6) oder einer Stirnseite (5) der Außenhülle (2) angeordnet ist, dass dessen Bewegung in Längsrichtung des Kraftstoffbehälters (1) stabilisiert wird, wobei der Zusatztank (7) und wenigstens eine Zwischenwand (6) miteinander korrespondierende Verbindungselemente (13,14) aufweisen,
**dadurch gekennzeichnet, dass** wenigstens eine an den Zusatztank (7) angrenzende Zwischenwand (6) als Schwallwand ausgebildet ist, wobei wenigstens eine Durchgangsöffnung (13) der Schwallwand (6) ein Verbindungselement darstellt, welches mit einem als Vorsprung (14) ausgebildeten Verbindungselement des Zusatztanks (7) korrespondiert.

2. Kraftstoffbehälter nach Anspruch 1,
**dadurch gekennzeichnet, dass** der Zusatztank (7) an wenigstens einer Stirnseite (12) eine an die angrenzende Zwischenwand (6) oder Stirnseite (5) der Außenhülle (2) angepasste Struktur aufweist.

3. Kraftstoffbehälter nach Anspruch 1,
**dadurch gekennzeichnet, dass** der Zusatztank (7) zwischen zwei Schwallwänden (6) angeordnet ist und Vorsprünge (14) des Zusatztanks (7) formschlüssig mit Durchgangsöffnungen (13) der Schwallwände (6) verbunden sind.

4. Kraftstoffbehälter nach einem der Ansprüche 1 bis 3,
**dadurch gekennzeichnet, dass** sich der Zusatztank (7) nur über einen Teil der Höhe des Innenraums (3) des Kraftstoffbehälters (1) erstreckt.

5. Kraftstoffbehälter nach Anspruch 4,
**dadurch gekennzeichnet, dass** das im Innenraum (3) aufgenommene flüssige oder gasförmige Medium zumindest unterhalb des Zusatztanks (7) strömen kann, so dass sich das den Zusatztank (7) umgebende flüssige oder gasförmige Medium austauschen kann.

6. Kraftstoffbehälter nach einem der Ansprüche 1 bis 5,
**dadurch gekennzeichnet, dass** die Anzahl und Anordnung der Vorsprünge (14) des Zusatztanks (7) der Anzahl und Anordnung der Durchgangsbohrungen (13) der Fläche der Schwallwände (6) entspricht, die an den Zusatzbehälter (7) angrenzen.

7. Kraftstoffbehälter nach einem der Ansprüche 1 bis 6,
**dadurch gekennzeichnet, dass** der Zusatztank (7) außenseitig an seiner Hülle (8) mit einer Dichtung (15) versehen ist, welche die wenigstens eine Öffnung (10) umgibt.

8. Kraftstoffbehälter nach Anspruch 7,
**dadurch gekennzeichnet, dass** die Dichtung (15) zwischen dem Zusatztank (7) und der Innenseite der Außenhülle (2) angeordnet ist.

9. Kraftstoffbehälter nach einem der Ansprüche 1 bis 6,
**dadurch gekennzeichnet, dass** der Zusatztank (7) an der wenigstens einen Öffnung (10) eine umlaufende Auskragung (19) aufweist, welche sich durch die Anschlussöffnung (11) in der Außenhülle (2) des Kraftstoffbehälters (1) erstreckt und an deren auf die Außenseite der Außenhülle (2) gerichteten Unterseite eine umlaufende Dichtung (15) angeordnet ist, welche die Anschlussöffnung (11) in der Außenhülle (2) des Kraftstoffbehälters (1) umgibt.

10. Kraftstoffbehälter nach einem der Ansprüche 7 bis 9,
**dadurch gekennzeichnet, dass** die Außenhülle (2) und/oder der Zusatztank (7) an den Flächen, die an die Dichtung (15) angrenzen, mit einer auf die Dichtung (15) gerichteten Verprägung (20) versehen sind.

11. Kraftstoffbehälter nach einem der Ansprüche 1 bis 10,
**dadurch gekennzeichet**, dass der Zusatztank (7) mit der Außenhülle (2) verschraubt ist.

12. Kraftstoffbehälter nach Anspruch 11,
**dadurch gekennzeichnet, dass** der Zusatztank (7) Gewindebuchsen (16) und/oder Gewindebohrungen zur Verschraubung mit der Außenhülle (2) aufweist.

13. Kraftstoffbehälter nach Anspruch 12,
**dadurch gekennzeichnet, dass** die Außenhülle (2) mit Bohrungen (17) versehen ist, welche mit den Gewindebuchsen (16) oder den Gewindebohrungen des Zusatztanks (7) fluchten.

14. Kraftstoffbehälter nach einem der Ansprüche 1 bis 13,
**dadurch gekennzeichnet, dass** an der dem Innenraum (3) des Kraftstoffbehälters (1) zugewandten Innenseite der Außenhülle (2) in einem die Öffnung (10) des Zusatztanks (7) umfassenden Randbereich ein Verstärkungsflansch (21) angeordnet ist.

15. Kraftstoffbehälter nach einem der Ansprüche 1 bis 14,
**dadurch gekennzeichnet, dass** der Zusatztank (7) wenigstens zwei Öffnungen (10) aufweist, die mit entsprechenden Anschlussöffnungen (11) in der Außenhülle (2) des Kraftstoffbehälters (1) verbunden sind, wobei eine Öffnung (10) zur Befüllung des Aufnahmeraums (9) des Zusatztanks (7) und die andere Öffnung (10) zur Entnahme des in dem Aufnahmeraum (9) enthaltenen Mediums ausgebildet ist.

16. Kraftstoffbehälter nach einem der Ansprüche 1 bis 15,
**dadurch gekennzeichnet, dass** der Zusatztank (7) als Kunststoffbehälter ausgebildet ist.

17. Kraftstoffbehälter nach Anspruch 1,
**dadurch gekennzeichnet dass** der Zusatztank (7) als reißfester und gegenüber dem einzubringenden Medium beständiger Sack, Tüte oder Beutel ausgebildet ist.

18. Kraftstoffbehälter nach Anspruch 17,
**dadurch gekennzeichnet, dass** der Sack, die Tüte oder der Beutel (7) im Bereich der Anschlussöffnung (11) mit der Außenhülle (2) des Kraftstoffbehälters (1) verbunden ist.

19. Kraftstoffbehälter nach Anspruch 17 oder 18,
**dadurch gekennzeichnet, dass** der Sack, die Tüte oder der Beutel (7) im Bereich der Anschlussöffnung (11) aufgesteckt und/oder eingeschraubt und/oder aufgehängt ist.

20. Kraftstoffbehälter nach einem der Ansprüche 17, 18 oder 19,
**dadurch gekennzeichnet, dass** die wenigstens eine Öffnung (10) des Sacks, der Tüte oder des Beutels (7) mit einem Fixierring oder einem Flansch (23) versehen ist, welcher geeignet ist, mit der Anschlussöffnung (11) in der Außenhülle (2) des Kraftstoffbehälters (1) verbunden zu werden.

21. Kraftstoffbehälter nach Anspruch 20,
**dadurch gekennzeichnet, dass** zwischen dem Fixierring oder dem Flansch (23) und der Außenhülle (2) des Kraftstoffbehälters (1) eine Dichtung (15) angeordnet ist.

22. Kraftstoffbehälter nach einem der Ansprüche 17 bis 21,
**dadurch gekennzeichnet, dass** der Sack, die Tüte oder der Beutel (7) eine Länge derart aufweist, dass dieser wenigstens teilweise auf dem Boden des Kraftstoffbehälters (1) aufliegt.

23. Kraftstoffbehälter nach einem der Ansprüche 17 bis 22,
**dadurch gekennzeichnet, dass** der Sack, die Tüte oder der Beutel (7) ein Volumen von 20 bis 150 Litern, vorzugsweise 50 bis 100 Litern, aufweist.

24. Kraftstoffbehälter nach einem der Ansprüche 1 bis 23,
**dadurch gekennzeichnet, dass** das zweite flüssige oder gasförmige Medium ein Harnstoff, ein Zweitkraftstoff, eine Betriebsstoffkomponente bzw. Drittkomponente oder Wasser ist.

25. Kraftstoffbehälter nach einem der Ansprüche 1 bis 24, wobei der Zusatztank zur Anordnung in einem Innenraum (2) eines Kraftstoffbehälters (1) ausgebildet ist.

## Claims

1. Fuel container for vehicles, in particular for commercial vehicles, having an outer casing which forms at least one interior space for receiving a liquid or gaseous medium, wherein at least one intermediate wall is located in the interior space between two end sides of the outer casing, wherein an additional tank (7) is located in the interior space (3), wherein the additional tank (7) has a casing (8) which is independent of the fuel container (1), which casing (8) provides a receiving space (9) for receiving a second liquid or gaseous medium, wherein the casing (8) has at least one opening (10) which corresponds to a connection opening (11) in the outer casing (2) of the fuel container (1), and wherein the additional tank (7) is located in such a manner between a first intermediate wall (6) and a second intermediate wall (6) or an end side (5) of the outer casing (2) that the movement of said additional tank (7) is stabilized in the longitudinal direction of the fuel container (1), wherein the additional tank (7) and at least one intermediate wall (6) have mutually corresponding connection elements (13, 14),
**characterized in that**
at least one intermediate wall (6) which adjoins the additional tank (7) is configured as a splash wall, wherein at least one through opening (13) of the splash wall (6) represents a connection element which corresponds to a connection element of the additional tank (7), said connection element being configured as a projection (14).

2. Fuel container according to Claim 1,
**characterized in that**
the additional tank (7) on at least one end side (12) has a structure which is adapted to the adjoining intermediate wall (6) or end side (5) of the outer casing (2).

3. Fuel container according to Claim 1,
**characterized in that**
the additional tank (7) is located between two splash walls (6), and projections (14) of the additional tank (7) are connected in an interlocking manner to through openings (13) of the splash walls (6).

4. Fuel container according to one of Claims 1 to 3,
**characterized in that**
the additional tank (7) extends only over part of the height of the interior space (3) of the fuel container (1).

5. Fuel container according to Claim 4,
**characterized in that**
the liquid or gaseous medium received in the interior space (3) can flow at least beneath the additional tank (7) such that the liquid or gaseous medium surrounding the additional tank (7) can be exchanged.

6. Fuel container according to one of Claims 1 to 5,
**characterized in that**
the number and location of the projections (14) of the additional tank (7) correspond to the number and location of the through holes (13), of the face of the splash walls (6) which adjoin the additional container (7).

7. Fuel container according to one of Claims 1 to 6,
**characterized in that**
the casing (8) on the outer side of the additional tank (7) is provided with a seal (15) which surrounds the at least one opening (10).

8. Fuel container according to Claim 7,
**characterized in that**
the seal (15) is located between the additional tank (7) and the inner side of the outer casing (2).

9. Fuel container according to one of Claims 1 to 6,
**characterized in that**
the additional tank (7) has a protrusion (19) encircling the at least one opening (10), which protrusion extends through the connection opening (11) in the outer casing (2) of the fuel container (1) and an encircling seal (15) is located on the lower side of said protrusion facing the outer side of the outer casing (2), which seal surrounds the connection opening (11) in the outer casing (2) of the fuel container (1).

10. Fuel container according to one of Claims 7 to 9,
**characterized in that**
the outer casing (2) and/or the additional tank (7) on the faces which adjoin the seal (15) have an impressed formation (20) which points towards the seal (15).

11. Fuel container according to one of Claims 1 to 10,
**characterized in that**
the additional tank (7) is screwed to the outer casing (2).

12. Fuel container according to Claim 11,
**characterized in that**
the additional tank (7) has threaded bushings (16) and/or tapped holes for the screw connection to the outer casing (2).

13. Fuel container according to Claim 12,
**characterized in that**
the outer casing (2) has holes (17) which align with the threaded bushings (16) or the tapped holes of the additional tank (7).

14. Fuel container according to one of Claims 1 to 13,
**characterized in that**
on the inner side of the outer casing (2) which faces the interior space (3) of the fuel container (1) a reinforcement flange (21) is located in a peripheral region surrounding the opening (10) of the additional tank (7).

15. Fuel container according to one of Claims 1 to 14,
**characterized in that**
the additional tank (7) has at least two openings (10) which are connected to corresponding connection openings (11) in the outer casing (2) of the fuel container (1), wherein one opening (10) is configured for filling the receiving space (9) of the additional tank (7) and the other opening (10) is configured for retrieving the medium contained in the receiving space (9).

16. Fuel container according to one of Claims 1 to 15,
**characterized in that**
the additional tank (7) is configured as a plastics container.

17. Fuel container according to Claim 1,
**characterized in that**
the additional tank (7) is configured as a sack, bag or pouch which is tear-resistant and durable with respect to the medium to be introduced.

18. Fuel container according to Claim 17,
**characterized in that**
the sack, the bag or the pouch (7) is connected in the region of the connection opening (11) to the outer casing (2) of the fuel container (1).

19. Fuel container according to Claim 17 or 18,
**characterized in that**
the sack, the bag or the pouch (7) is mounted and/or screwed on and/or suspended in the region of the connection opening (11).

20. Fuel container according to one of Claims 17, 18 or 19,
**characterized in that**
the at least one opening (10) of the sack, of the bag or of the pouch (7) is provided with a fixing ring or a flange (23) which is suitable for connecting to the connection opening (11) in the outer casing (2) of the fuel container (1).

21. Fuel container according to Claim 20,
**characterized in that**
a seal (15) is located between the fixing ring or the flange (23) and the outer casing (2) of the fuel container (1).

22. Fuel container according to one of Claims 17 to 21,
**characterized in that**
the sack, the bag or the pouch (7) has a length such that said sack, bag or pouch at least partially rests on the base of the fuel container (1).

23. Fuel container according to one of Claims 17 to 22,
**characterized in that**
the sack, the bag or the pouch (7) has a volume of 20 to 150 litres, preferably 50 to 100 litres.

24. Fuel container according to one of Claims 1 to 23,
**characterized in that**
the second liquid or gaseous medium is a urea, a secondary fuel, a component of an operating fluid or a tertiary component, or water.

25. Fuel container according to one of Claims 1 to 24, wherein the additional tank is configured to be located in an interior space (2) of a fuel container (1).

## Revendications

1. Réservoir de carburant pour véhicules, en particulier pour véhicules utilitaires, comprenant une enveloppe extérieure qui forme au moins un espace intérieur pour recevoir un milieu liquide ou gazeux, au moins une paroi intermédiaire étant disposée dans l'espace intérieur entre deux côtés frontaux de l'enveloppe extérieure, un réservoir auxiliaire (7) étant disposé dans l'espace intérieur (3), le réservoir auxiliaire (7) comprenant une enveloppe (8) indépendante du réservoir de carburant (1), laquelle fournit un espace de réception (9) pour recevoir un deuxième milieu liquide ou gazeux, l'enveloppe (8) comprenant au moins une ouverture (10) qui correspond à une ouverture de raccordement (11) dans l'enveloppe extérieure (2) du réservoir de carburant (1), et le réservoir auxiliaire (7) étant disposé entre une première paroi intermédiaire (6) et une deuxième paroi intermédiaire (6) ou un côté frontal (5) de l'enveloppe extérieure (2) de telle sorte que son déplacement dans la direction longitudinale du réservoir de carburant (1) soit stabilisé, le réservoir auxiliaire (7) et au moins une paroi intermédiaire (6) comprenant des éléments de liaison (13, 14) correspondant les uns aux autres,
**caractérisé en ce qu'**au moins une paroi intermédiaire (6) adjacente au réservoir auxiliaire (7) est réalisée sous la forme d'une paroi brise-flot, au moins une ouverture traversante (13) de la paroi brise-flot (6) constituant un élément de liaison qui correspond à un élément de liaison, réalisé sous forme de saillie (14), du réservoir auxiliaire (7).

2. Réservoir de carburant selon la revendication 1,
**caractérisé en ce que** le réservoir auxiliaire (7) présente, sur au moins un côté frontal (12), une structure adaptée à la paroi intermédiaire (6) ou au côté frontal (5) adjacent(e) de l'enveloppe extérieure (2).

3. Réservoir de carburant selon la revendication 1,
**caractérisé en ce que** le réservoir auxiliaire (7) est disposé entre deux parois brise-flot (6) et des saillies (14) du réservoir auxiliaire (7) sont reliées par complémentarité de formes avec des ouvertures traversantes (13) des parois brise-flot (6).

4. Réservoir de carburant selon l'une quelconque des revendications 1 à 3,
**caractérisé en ce que** le réservoir auxiliaire (7) ne s'étend que sur une partie de la hauteur de l'espace intérieur (3) du réservoir de carburant (1).

5. Réservoir de carburant selon la revendication 4,
**caractérisé en ce que** le milieu liquide ou gazeux reçu dans l'espace intérieur (3) peut s'écouler au moins en dessous du réservoir auxiliaire (7), de telle sorte que le milieu liquide ou gazeux entourant le réservoir auxiliaire (7) puisse être remplacé.

6. Réservoir de carburant selon l'une quelconque des revendications 1 à 5,
**caractérisé en ce que** le nombre et l'agencement des saillies (14) du réservoir auxiliaire (7) correspondent au nombre et à l'agencement des alésages traversants (13) de la surface des parois brise-flot (6) qui sont adjacentes au réservoir auxiliaire (7).

7. Réservoir de carburant selon l'une quelconque des revendications 1 à 6,
**caractérisé en ce que** le réservoir auxiliaire (7) est pourvu du côté extérieur, sur son enveloppe (8), d'un joint d'étanchéité (15) qui entoure l'au moins une ouverture (10).

8. Réservoir de carburant selon la revendication 7,
**caractérisé en ce que** le joint d'étanchéité (15) est disposé entre le réservoir auxiliaire (7) et le côté intérieur de l'enveloppe extérieure (2).

9. Réservoir de carburant selon l'une quelconque des revendications 1 à 6,
**caractérisé en ce que** le réservoir auxiliaire (7) comprend, au niveau de l'au moins une ouverture (10), une partie saillante périphérique (19) qui s'étend, à travers l'ouverture de raccordement (11), dans l'enveloppe extérieure (2) du réservoir de carburant (1), et sur le côté inférieur, tourné vers le côté extérieur de l'enveloppe extérieure (2), de ladite partie saillante est disposé un joint d'étanchéité périphérique (15) qui entoure l'ouverture de raccordement (11) dans l'enveloppe extérieure (2) du réservoir de carburant (1).

10. Réservoir de carburant selon l'une quelconque des revendications 7 à 9,
**caractérisé en ce que** l'enveloppe extérieure (2) et/ou le réservoir auxiliaire (7) est/sont pourvu(e)(s), sur les surfaces qui sont adjacentes au joint d'étanchéité (15), d'une empreinte (20) orientée vers le joint d'étanchéité (15).

11. Réservoir de carburant selon l'une quelconque des revendications 1 à 10,
**caractérisé en ce que** le réservoir auxiliaire (7) est vissé sur l'enveloppe extérieure (2).

12. Réservoir de carburant selon la revendication 11,
**caractérisé en ce que** le réservoir auxiliaire (7) comprend des douilles filetées (16) et/ou des alésages filetés pour le vissage sur l'enveloppe extérieure (2).

13. Réservoir de carburant selon la revendication 12,
**caractérisé en ce que** l'enveloppe extérieure (2) est pourvue d'alésages (17) qui sont en alignement avec les douilles filetées (16) ou les alésages filetés du réservoir auxiliaire (7).

14. Réservoir de carburant selon l'une quelconque des revendications 1 à 13,
**caractérisé en ce qu'**une bride de renforcement (21) est disposée sur le côté intérieur de l'enveloppe extérieure (2) tourné vers l'espace intérieur (3) du réservoir de carburant (1), dans une région de bord entourant l'ouverture (10) du réservoir auxiliaire (7).

15. Réservoir de carburant selon l'une quelconque des revendications 1 à 14,
**caractérisé en ce que** le réservoir auxiliaire (7) comprend au moins deux ouvertures (10) qui sont reliées à des ouvertures de raccordement (11) correspondantes dans l'enveloppe extérieure (2) du réservoir de carburant (1), une ouverture (10) étant réalisée pour le remplissage de l'espace de réception (9) du réservoir auxiliaire (7) et l'autre ouverture (10) étant réalisée pour le prélèvement du milieu contenu dans l'espace de réception (9).

16. Réservoir de carburant selon l'une quelconque des revendications 1 à 15,
**caractérisé en ce que** le réservoir auxiliaire (7) est réalisé sous forme de récipient en plastique.

17. Réservoir de carburant selon la revendication 1,
**caractérisé en ce que** le réservoir auxiliaire (7) est réalisé sous forme de sac, poche ou sachet résistant au déchirement et résistant par rapport au milieu à introduire.

18. Réservoir de carburant selon la revendication 17,
**caractérisé en ce que** le sac, la poche ou le sachet (7) est relié(e) à l'enveloppe extérieure (2) du réservoir de carburant (1) dans la région de l'ouverture de raccordement (11).

19. Réservoir de carburant selon la revendication 17 ou 18,
**caractérisé en ce que** le sac, la poche ou le sachet (7) est enfiché(e) et/ou vissé(e) et/ou suspendu(e) dans la région de l'ouverture de raccordement (11).

20. Réservoir de carburant selon l'une quelconque des revendications 17, 18 ou 19,
**caractérisé en ce que** l'au moins une ouverture (10) du sac, de la poche ou du sachet (7) est pourvue d'une bague de fixation ou d'une bride (23) qui est appropriée pour être reliée à l'ouverture de raccordement (11) dans l'enveloppe extérieure (2) du réservoir de carburant (1).

21. Réservoir de carburant selon la revendication 20,
**caractérisé en ce qu'**un joint d'étanchéité (15) est disposé entre la bague de fixation ou la bride (23) et l'enveloppe extérieure (2) du réservoir de carburant (1).

22. Réservoir de carburant selon l'une quelconque des revendications 17 à 21,
**caractérisé en ce que** le sac, la poche ou le sachet (7) présente une longueur telle qu'il/elle repose au moins partiellement sur le fond du réservoir de carburant (1).

23. Réservoir de carburant selon l'une quelconque des revendications 17 à 22,
**caractérisé en ce que** le sac, la poche ou le sachet (7) présente un volume de 20 à 150 litres, de préférence de 50 à 100 litres.

24. Réservoir de carburant selon l'une quelconque des revendications 1 à 23,
**caractérisé en ce que** le deuxième milieu liquide ou gazeux est une urée, un carburant secondaire, un composant de fluide de service consommable ou un composant tiers ou de l'eau.

25. Réservoir de carburant selon l'une quelconque des revendications 1 à 24, le réservoir auxiliaire étant réalisé pour l'agencement dans un espace intérieur (2) d'un réservoir de carburant (1).
